# EUROPEAN PATENT APPLICATION

(11) **EP 1 643 676 A1**
(43) Date of publication of application: **05.04.2006**
(21) Application number: 04738336.9
(22) Date of filing: 02.07.2004
(51) Int. Cl.: H04L 9/32

(54) **AN ALTERNATION DISPOSAL METHOD FOR NETWORK SELECTION INFORMATION OF USER TERMINAL IN WLAN**

(30) Priority: 04.07.2003 CN 03146218
(71) Applicant: Huawei Technologies Co., Ltd., Longgang District, Shenzehen, Guangdong 518129 (CN)
(72) Inventor: ZHANG, Wenlin, Shenzhen, Guangdong 518129 (CN)
(74) Representative: Manitz, Gerhart
(86) International application number: PCT/CN2004/000738
(87) International publication number: WO 2005/004384

(57) **Abstract**

The present invention discloses an interactive processing method for network selection information of user terminal in WLAN. The method comprises the following steps: after a radio connection between a WLAN user terminal and a WLAN AN is established, the WLAN AN or WLAN user terminal initiates an authentication procedure, and the WLAN AN sends to the WLAN user terminal a user identity request message; after receiving the user identity request message, the WLAN user terminal returns to the WLAN AN a message containing network selection information; judges whether the network selection information in the received message identifies a wireless communication network connected with the WLAN, if yes, send the authentication request of the WLAN user terminal to the wireless communication network identified by the network selection information; otherwise, the network sends an advertisement message to the WLAN user terminal, and the WLAN user terminal performs subsequent operations according to the contents of the advertisement message. This invention enables WLAN user terminal to select an appropriate wireless communication network according to its need when the WLAN user terminal get accessed via a WLAN connected with a plurality of wireless communication networks.

## Description

### Field of the Invention

The present invention relates to network accessing techniques, more particularly, to an interactive processing method for network selection information of user terminal in wireless local area network (WLAN).

### Background of the Invention

At users' demand for an increasingly high rate of wireless access, there emerges WLAN, which is able to provide high-rate wireless data access in a relatively small area. Various techniques have been used in WLAN, among which a technical standard with more applications is IEEE 802.11b. This standard utilizes the frequency band of 2.4GHz with a data transmission rate up to 11 Mbps. Other technical standards utilizing the same frequency band include IEEE 802.11g and the Bluetooth, wherein the data transmission rate of IEEE 802.11g is up to 54Mbps. There are other new standards such as IEEE 802.11a and ETSI BRAN Hiperlan2 which use the frequency band of 5GHz with the transmission rate up to 54 Mbps as well.

Although there are various standards for wireless access, most WLANs are used for transferring IP data packets. The specific WLAN access standard adopted by a wireless IP network is usually transparent to the upper-level IP. Such a network is typically configured with Access Points (AP) for implementing wireless access of WLAN user terminal, like WLAN user equipment (UE), and with network controlling and connecting devices for implementing IP transmission.

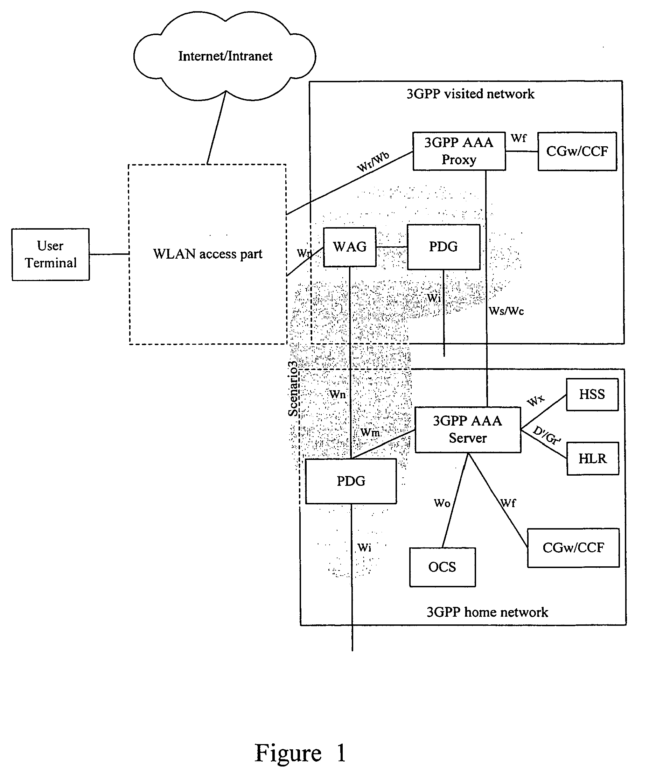

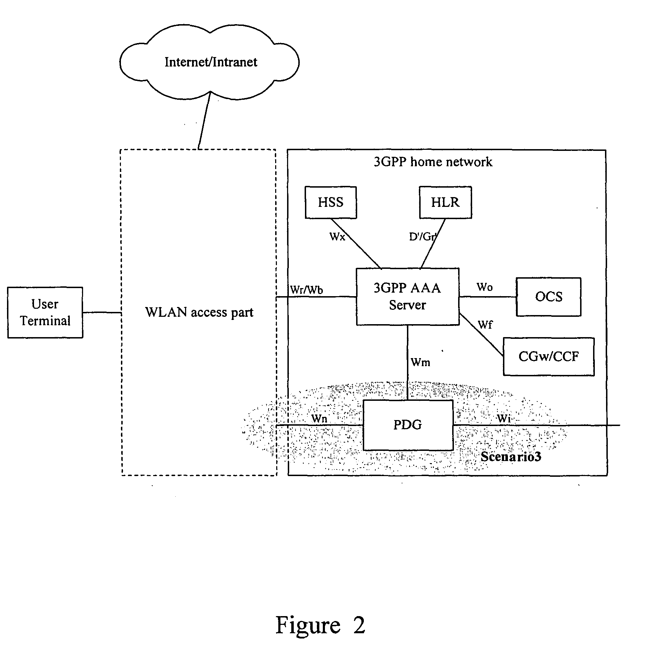

Along with the rising and developing of WLAN, focus of research is shifting to the inter-working of WLAN with various mobile communications networks, such as GSM, CDMA, WCDMA, TD-SCDMA, and CDMA2000. In accordance with the 3GPP standards, user terminal is able to connect with Internet and Intranet as well as the home network and visited network of a 3GPP system via a WLAN access network (WLAN AN). To be specific, when getting accessed locally, a WLAN user terminal will get connected with the 3GPP home network via a WLAN AN, as shown in Figure 2; when roaming, it will get connected with the 3GPP visited network via the WLAN AN. Some entities of the 3GPP visited network are connected with corresponding entities of the 3GPP home network, for instance, the 3GPP Authentication Authorization Accounting (AAA) proxy in the visited network is connected with the 3GPP AAA server in the home network, the WLAN Access Gateway (WAG) in the visited network is connected with the Packet Data Gateway (PDG) in the home network, as shown in Figure 1. Figure1 and Figure 2 are the schematic diagrams illustrating the networking architectures of a WLAN inter-working with a 3GPP system under roaming and non-roaming circumstances, respectively.

As shown in Figure 1 and Figure 2, a 3GPP system primarily comprises Home Subscriber Server (HSS)/ Home Location Register (HLR), 3GPP AAA server, 3GPP AAA proxy, WAG, PDG, Charging Gateway (CGw)/Charging information Collecting Function (CCF), and Online Charging System (OCS). WLAN user terminal, WLAN AN, and all the entities of the 3GPP system together constitute a 3GPP-WLAN inter-working network, which can be regarded as a WLAN service system. In this service system, 3GPP AAA server is in charge of authentication, authorization, and accounting of WLAN user terminal, collecting the charging information sent from the WLAN AN and transferring the information to the charging system; PDG is in charge of transmission of user data from the WLAN AN to the 3GPP network or other packet data networks; and the charging system mainly receives and records the charging information of WLAN user terminal transferred from the network while OCS instructs the network to transmit online charging information periodically in accordance with the expenses of the online charged users, makes statistics and conducts control.

Under non-roaming circumstances, when a WLAN user terminal desires to get accessed directly to the Internet/Intranet, the WLAN user terminal can access to Internet/Intranet via a WLAN AN after it accomplishes authentication with the AAA server (AS) via the WLAN AN. Should the WLAN user terminal desire to get accessed to the service of 3GPP packet switched (PS) domain as well, it may further request the service of Scenario 3 from the 3GPP home network. That is, the WLAN user terminal initiates a service authorization request for Scenario 3 to the AS of the 3GPP home network, which will carry out service authentication and authorization for that request; if the authentication and authorization succeeds, AS will send an access accept message to the WLAN user terminal and assign a corresponding PDG for the WLAN user terminal. When a tunnel is established between the WLAN user terminal and the assigned PDG, the WLAN user terminal will be able to get accessed to the service of 3GPP PS domain. Meanwhile, the offline charging system and OCS records the charging information in accordance with the WLAN user terminal's occupation of the network.

Under roaming circumstances, when a WLAN user terminal desires to get accessed directly to the Internet/Intranet, it may make a request to the 3GPP home network by way of the 3GPP visited network for access to the Internet/Intranet. Should the WLAN user terminal also desire to request the service of Scenario 3 to get accessed to the service of the 3GPP PS domain, the WLAN user terminal needs to initiate via the 3GPP visited network a service authorization process at the 3GPP home network. The authorization is carried out likewise between the WLAN user terminal and AS of the 3GPP home network. After the authorization succeeds, AS assigns the corresponding home PDG for the WLAN user terminal, then the WLAN user terminal will be able to get accessed to the service of 3GPP PS domain of the home network after it establishes a tunnel with the assigned PDG via the WAG of the 3GPP visited network.

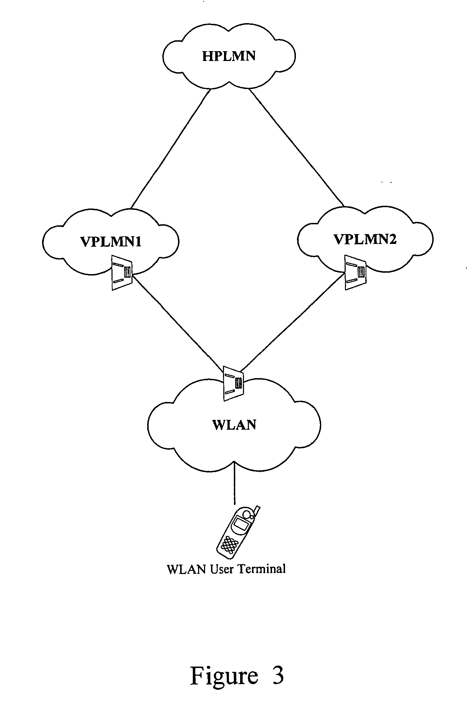

As shown in Figure 3, in a 3GPP-WLAN inter-working network, if a WLAN is connected at the same time with a plurality of 3GPP visited networks, that is, a plurality of wireless communication networks (3GPP visited networks herein refer to Visited Public Land Mobile Networks (VPLMN)) to which the WLAN AN can route the authentication signaling, it will be necessary for a WLAN user terminal to select the desired VPLMN to access after the WLAN user terminal gets accessed to the WLAN. For instance, in China, a WLAN AN may be connected simultaneously with two operating VPLMN, China Mobile and China Unicom; then a user of China Unicom, after getting accessed via the WLAN, has to instruct the WLAN AN to get it accessed to the operating VPLMN of China Unicom.

For another instance, a French user may roam to a WLAN in China, if the home network of the French user has roaming protocols with both China Mobile and China Unicom, then under the circumstances that the WLAN AN is connected with both China Mobile and China Unicom, this French user needs to select a VPLMN to get accessed after accessing the WLAN. At present, however, there has been no specific solution to the procedure of interactive processing through which WLAN user terminal informs the WLAN AN of the information of the network to be accessed and the 3GPP-WLAN inter-working network handles the network selection information from the WLAN user terminal.

### Summary of the Invention

In view of the above, the primary object of this invention is to provide an interactive processing method for network selection information of WLAN user terminal in WLAN such that the WLAN user terminal is able to select an appropriate wireless communication network to get accessed according to its need when it is accessing via a WLAN connecting with a plurality of wireless communication networks.

To attain the above object, a solution is presented by this invention as follows:

An interactive processing method for network selection information of user terminal in wireless local area network (WLAN) comprises:
a. After a radio connection between a WLAN user terminal and a WLAN access network (AN) is established, the WLAN AN or the WLAN terminal initiates an authentication procedure and the WLAN AN sends to the WLAN user terminal a user identity request message;
b. Upon receiving the user identity request message, the WLAN user terminal returns to the WLAN AN a response message containing a network selection information;
c. Judges whether the network selection information in the received message indicates a wireless communication network to which the WLAN AN is able to route an authentication request, if yes, sends the authentication request of the WLAN user terminal to the indicated wireless communication network; otherwise, sends an advertisement message to the WLAN user terminal, and the WLAN user terminal performs subsequent operations according to the contents of the advertisement message.

If the WLAN user terminal initiates the authentication procedure in step a, the step a further comprises: the WLAN user terminal sends to the network side a request for information about supported wireless communication networks before the authentication procedure is initiated. The request for information about supported wireless communication networks sent by the WLAN user terminal to the network side is made by an Extendable Authentication Protocol (EAP) signaling or by the portal interaction.

The step b further comprises: upon receiving the user identity request message, the WLAN user terminal sends to the network side a request for information about supported wireless communication networks; upon receiving the request, the network side issues to the WLAN user terminal the information about supported wireless communication networks; the WLAN user terminal selects a wireless communication network according to the received information and re-sends to the WLAN AN an authentication request which contains the new network-selection information. The request for information about supported wireless communication networks is a specific field placed in a response message, or a specific value of a user identity field in a response message, or an independently configured message.

The network side sends in step c to the WLAN user terminal an advertisement message containing the information about supported wireless communication networks, and the method further comprises: upon receiving the advertisement message, the WLAN user terminal re-selects a wireless communication network and obtains the network information corresponding to the selected wireless communication network based on the network information in the advertisement message, and then sends a message containing the new network-selection information to the WLAN AN, returns to step c. In this case, the method further comprises: the network side waits for a response message from the WLAN user terminal after issuing the advertisement message, and if receives no response in a certain period of time, takes the initiative to issue a request for selection result to the WLAN user terminal. Alternatively, the network side ends the current authentication procedure after issuing the advertisement message, and the WLAN user terminal, after re-selecting a wireless communication network, re-initiates to the WLAN AN an authentication procedure, and sends an authentication request which containing the new network-selection information.

The network side sends in step c to the WLAN user terminal an advertisement message indicates the ineffectiveness of the network currently selected by the WLAN user terminal and the need of downloading the information about supported wireless communication networks, the method further comprises: the WLAN user terminal judges whether it needs to download the information about supported wireless communication network, if it needs, the WLAN user terminal returns to the network side a response indicating that it needs to download the network information; upon receiving the response, the network side issues to the WLAN user terminal the information about supported wireless communication network; upon obtaining the information, the WLAN user terminal re-selects a wireless communication network and re-sends to the WLAN AN an authentication request which containing the new network-selection information, returns to step c; otherwise, makes no processing or returns a response indicating no need of downloading the information. In this case, the method further comprises: the network side waits for a response message from the WLAN user terminal after issuing the advertisement message, and if have not received a response after a certain period of time, takes the initiative to issue the information about supported wireless communication networks to the WLAN user terminal. Alternatively, the network side ends the current procedure after issuing the advertisement message, and the WLAN user terminal, if needing the network information, takes the initiative to initiate a procedure of downloading network information.

In the above mentioned schemes, the WLAN user terminal, according to preset parameters, makes an automatic selection based on the information about supported wireless communication networks issued by the network side.

In the above mentioned schemes, the network selection information sent by the WLAN user terminal indicates a wireless communication network to which the WLAN AN is able to route an authentication request, then step c further comprises: the network side judges whether the network selection information includes the information about one or more visited networks, if yes, the WLAN AN, according to the information of the visited network, sends the authentication request to the Authentication Authorization Accounting (AAA) proxy in the visited network; otherwise, the WLAN AN, according to the network selection information, sends the authentication request to the AAA server in the home network of the WLAN user. If the network selection information is placed in the user identity field of the response message defined in the format of Network Access Identifier (NAI), and the step c further comprises: upon receiving the authentication request of the WLAN user terminal, the AAA proxy obtains the realm name of home network by analyzing the user identity field, and forwards the authentication request to the AAA server in the home network according to the realm name of home network for authentication and authorization. The method further comprises: upon receiving the authentication request of the WLAN user terminal, if the AAA proxy confirming that the user identity field contains the information of visited network and the information of visited network is same to the information of the network in which the AAA proxy is located, then modifies the user identity field to make it contain only the realm name of the home network of the WLAN user, and forwards the modified request to the home network of the WLAN user.

The operations of judging and sending an advertisement message in step c are performed by a pre-configured unit for managing and sending network information; the unit for managing and sending network information is located in an access controller (AC), in an access point (AP) or in a local AAA server of the WLAN AN, or in an AAA functionality of a wireless communication network to which the WLAN AN is able to route the authentication request.

The network currently serving the WLAN user terminal is the home network of the WLAN user while the authentication request sent by the WLAN user terminal contains the information of visited network, the network currently serving the WLAN user terminal directly changes the information of visited network in the authentication request into the information of home network.

The network currently serving the WLAN user terminal is the home network of the WLAN user while the authentication request sent by the WLAN user terminal contains the information of visited network, the network currently serving the WLAN user terminal informs the WLAN user terminal that the network is the home network of the WLAN user, and judges whether the WLAN user terminal selects the home network, if yes, the network currently serving the WLAN user terminal authenticates the WLAN user terminal; otherwise, the visited network authenticates the WLAN user terminal.

The method further comprises: when issuing the information about supported wireless communication networks, the network side selects and issues the information of the visited networks having roaming relationship with the home network indicated by the WLAN user terminal.

In the above mentioned schemes, the network side issues the advertisement message by the EAP-Request/notification message and the advertisement message contains the information about supported wireless communication networks provided for the WLAN user terminal. The WLAN user terminal comprises the WLAN User Equipment (UE).

In accordance with the interactive processing method for network selection information of WLAN user terminal in WLAN provided by this invention, WLAN user terminal carries its network selection information directly in the authentication request when getting access to the WLAN; or makes selection based on the information of wireless communication networks issued by the WLAN AN and sends the network selection information to the WLAN AN by the authentication request such that the WLAN AN could determine the wireless communication network this WLAN user terminal desires to access, and it is the wireless communication network selected by the WLAN user terminal that makes authentication to the WLAN user terminal. As a result, a solution is given to the interactive processing of the network selection information between WLAN user terminal and WLAN AN when the WLAN user terminal takes the initiative to selecting a wireless communication network.

Other methods and advantages of the present invention will be or become apparent to one with skill in the art upon examination of the following drawings and detailed description. It is intended that all such additional methods and advantages be included within this description, be within the scope of the present invention, and be protected by the accompanying claims.

### Brief Description of the Drawings

Figure 1 is a schematic diagram illustrating the network architecture of inter-working WLAN and 3GPP system under roaming circumstances;
Figure 2 is a schematic diagram illustrating the network architecture of inter-working WLAN and 3GPP system under non-roaming circumstances;
Figure 3 is a schematic diagram illustrating the network architecture of WLAN connecting with a plurality of visited networks;
Figure 4 is the flowchart for interactive processing of the network selection information of WLAN user terminal in accordance with this invention;
Figure 5 is the flowchart for authentication and authorization of WLAN user terminal in accordance with this invention;
Figure 6 is the flowchart for interactive processing of network selection information in accordance with the first embodiment of this invention;
Figure 7 is the flowchart for interactive processing of network selection information in accordance with the second embodiment of this invention.

### Detailed Description of Embodiments

The key idea of this invention is as follows: WLAN user terminal sends the network selection information to WLAN AN by the authentication request, and WLAN AN recognizes the wireless communication network to which this WLAN user terminal desires to get access according to the network selection information carried in the request and connects the current WLAN user terminal to the selected network for authentication and subsequent operations.

The network selection information here refers to the information of the wireless communication network to which the WLAN user terminal currently desires to get access and with which the WLAN is connected. This selection information may be selected in advance by the WLAN user terminal or selected by the WLAN user terminal according to the selection information of wireless communication networks issued by the network. This network selection information may be placed in an independently configured field in an authentication request or placed in the user identity field defined in the format of NAI in an authentication request.

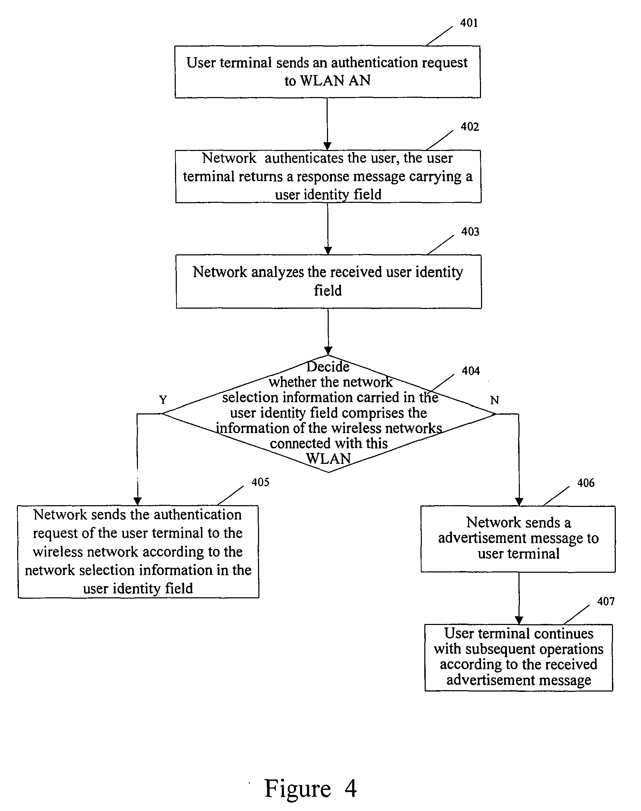

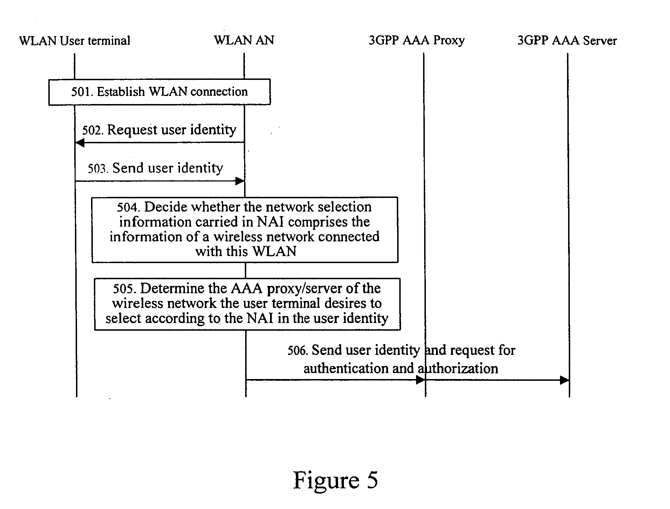

Based on the network architecture shown in Figure 3, the interactive procedure by which WLAN user terminal selects the information of wireless communication network to access, as shown in Figure 4, comprises the steps of:
Step 401: When a WLAN user terminal gets access to a 3GPP-WLAN inter-working network via the WLAN, the WLAN user terminal or WLAN AN initiates an authentication procedure. Hereinafter, take the procedure initiated by WLAN user terminal as an example, and the WLAN user terminal sends an authentication request to the WLAN AN;
Step 402: After receiving the request, WLAN AN starts an authentication procedure with the WLAN user terminal, i.e. an Extendable Authentication Protocol (EAP) procedure. Specifically, WLAN AN sends to the WLAN user terminal a user identity request message, requesting the username of the WLAN user terminal; after receiving this request, the WLAN user terminal sends to the WLAN AN a user identity response message containing network selection information, as shown in steps 502 and 503 in Figure 5. This network selection information may be placed in the user identity field defined in the format of NAI, thus take the network selection information placed in the user identity field as an example hereinafter, and the user identity field comprises two portions, the username portion and the realm name portion.
Steps 403-404: After receiving the response message carrying network selection information, WLAN AN makes analysis of the user identity field in the response message; decides whether the network selection information carried in the user identity field is the information of an wireless communication network connected with the WLAN, if yes, perform step 405; otherwise, i.e. WLAN AN can not recognize the wireless communication network in the network selection information, then perform step 406.
Step 405: Determine the wireless communication network to which the WLAN user terminal desires to get access according to the network selection information in the user identity field NAI, and the WLAN AN sends the authentication request of the WLAN user terminal to the wireless communication network identified by the network selection information for authentication.

If the WLAN AN decides according to the network selection information carried in the user identity field that the information includes information of visited network, the WLAN AN sends the authentication request to the AAA proxy of the visited network currently serving this WLAN user terminal according to the information of visited network in the user identity field, and the AAA proxy will forwards the authentication request to the AAA server of the home network of the WLAN user terminal for authentication; otherwise, the WLAN AN will send the authentication request to the AAA server of the home network of the WLAN user terminal according to the network selection information in the user identity field for authentication, as shown in step 506 in Figure 5. If AAA proxy of the visited network, after receiving the authentication request of the WLAN user terminal, decides that the user identity field contains information of visited network and the information of visited network is the information of this network, then modify the realm name portion in the user identity field to make the field contain only the realm name of home network, and then send the modified request to the home network of the WLAN user terminal.

If the network currently serving the WLAN user terminal is directly connected with the home network of the WLAN user terminal but the WLAN user terminal initiates the authentication request by an identifier of roaming network, i.e. the network selection information carried in the request contains information of visited network, then the network currently serving the WLAN user terminal may directly modify the information of visited network in the user identity field NAI into the information of home network; or the network currently serving the WLAN user terminal may send an advertisement message to the WLAN user terminal to inform the user that the network currently serving the WLAN user terminal is its home network, if the WLAN user terminal re-initiates an authentication request with the information of home network, the network currently serving the WLAN user terminal will directly perform the authentication procedure, but if the WLAN user terminal still confirms that the roaming network is selected, the network currently serving the WLAN user terminal will make authentication to this WLAN user terminal and provide subsequent services by the roaming network.

Steps 406~407: The network side sends an advertisement message to the WLAN user terminal, and the WLAN user terminal continues with subsequent operations based on the contents of the advertisement message. The advertisement message may directly adopt the EAP-Request/Notification message in the WLAN protocol, or adopt an independently configured advertisement message. The advertisement message sent to WLAN user terminal by the network can be classified into two types: one is that the advertisement message directly contains the information of wireless communication networks issued by the network such that a WLAN user terminal or user could make direct selection; the other is that the advertisement message is only a message to inform WLAN user terminal that the information of the selected wireless communication network is ineffective and that the WLAN user terminal needs to download the information of wireless communication networks.

In connection with the first type, since the advertisement message includes the information of the wireless communication networks connected with the WLAN, the WLAN user terminal can re-select a wireless communication network after receiving the message, obtain the network information corresponding to the selected wireless communication network according to the network information in the advertisement message, place the information of the selected wireless communication network in the user identity field NAI of the response message, and send the message to the WLAN AN again for recognition, then return to step 403. Here, the network may wait for the response of selection from the WLAN user terminal after issuing the advertisement message, and after waiting for certain time, if having not received a response, the network may take the initiative to send a selection result request to WLAN user terminal; the network may also end the current procedure after issuing the advertisement message without waiting for the selection response from the WLAN user terminal, then the WLAN user terminal may re-initiate an authentication procedure for the second time.

In connection with the second type of advertisement message, after receiving the advertisement message, the WLAN user terminal will automatically choose or the user will choose whether to download the information of wireless communication networks. That the WLAN user terminal will automatically make a choice means that the WLAN user terminal can handle the information issued from the network automatically according to parameters set in advance by the user and select an appropriate wireless communication network automatically. That the user makes a choice means that, when necessary, the information can be displayed for the user to make a choice, and when the information is displayed to the user, the WLAN user terminal may decide to choose to display the information of the networks having roaming relationship with the user's home network. If it is needed to download the information, the WLAN user terminal will return to the network a response indicating the need of downloading the network information; after receiving this response, the network will issue to the WLAN user terminal the information of wireless communication networks; after obtaining the information of wireless communication networks, the WLAN user terminal will re-select a wireless communication network and re-initiate an authentication request carrying the new network-selection information, then return to step 403; if it is not needed to download the network information, the WLAN user terminal will not make processing operations or will return a response message indicating that it is not needed to download the information. Here, the network may wait for the response of selection from the WLAN user terminal after issuing the advertisement message, and after waiting for certain time, if having not received a response, the network will take the initiative to issue the information of wireless communication networks to WLAN user terminal; the network may also end the current procedure after issuing the advertisement message without waiting for the selection response from the WLAN user terminal, then if WLAN user terminal needs to download network information, WLAN user terminal may take the initiative to send a request to initiate a network information downloading procedure.

In the above two cases, the information of wireless communication network provided by the network for WLAN user terminal to make selection is stored in a special network information storing unit. This information usually includes the following parameters: network name, bearing capacity of network, QoS, bandwidth, service capacity, available WLAN inter-working scenarios, charging rates, categories of service provider and etc. When issuing the information of the wireless communication networks connected with the current WLAN, the network may choose to issue the information of the visited networks having roaming relationship with the home network indicated by the WLAN user terminal, if there is no such a visited network, the network may issue no information or inform the user that no roaming relationship exists.

In the above solution, recognizing the network selection information in step 404 and sending advertisement in step 406 may be conducted by one network authentication entity, which may be referred to as the unit for managing and sending network information. Such a unit may exist in the WLAN AN, e.g. configured in the Access Controller (AC); or may exist in an wireless communication network which is connected with the current WLAN AN but located outside the WLAN AN and provide service for a plurality of WLAN ANs, e.g. configured in an AAA server; or may be a default AAA proxy configured in advance.

In the above solution, if it is WLAN user terminal that initiates an authentication procedure but can not determine the wireless communication network to be selected at the time of authentication, then the WLAN user terminal may send to the network a request for downloading the information of the wireless communication networks connected with the current WLAN before or at the same time of sending the authentication request or during the authentication procedure, i.e. WLAN user terminal may obtain the information of wireless communication networks and select a network before initiating an authentication procedure; or the network information downloading procedure is performed parallel with the authentication procedure. Here, the WLAN user terminal may send to the network the request for downloading network information by EAP signaling or by Portal interaction. The WLAN user terminal may also send to the network a request for needing to download the information of the wireless communication networks connected with the current WLAN after receiving the user identity request message sent from the WLAN AN. Such a request from the WLAN user terminal may be sent as an independent signaling; or a request identifier may be placed in the user identity response message, e.g. username in the response is null while the pre-configured download request field is set, or it may directly be defined that the username OxFFFF in the response message represents the need of downloading network information.

### Embodiment 1:

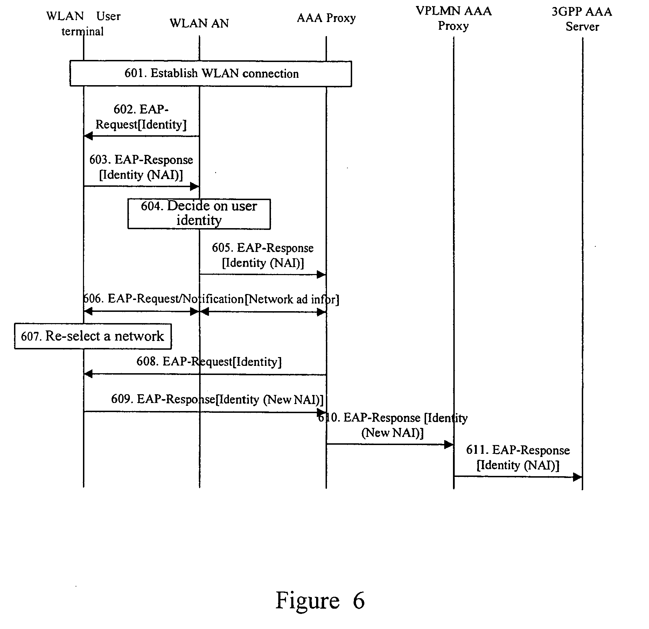

In this embodiment, a default AAA proxy is configured in advance in a 3GPP-WLAN inter-working network as the unit for managing and sending network information. This unit may provide service for one or more than one WLAN AN. As shown in Figure 6, the procedure of interactive processing of network selection information in accordance with this invention comprises the steps of:
Steps 601~603: After a WLAN user terminal sets up a radio connection with the WLAN AN, the WLAN user terminal sends an authentication request to the WLAN AN; after receiving the request, the WLAN AN sends to the WLAN user terminal an EAPoL-Request[Identity] message; after receiving the message, the WLAN user terminal sends to the WLAN AN an EAPoL-Response[Identity] message carrying a user identity field in NAI format, and this user identity field carries the network selection information.
Steps 604~605: The WLAN AN, according to the user identity field in the received message, determines the sending route of the authentication request of the WLAN user terminal. If finding the user identity field unrecognizable, i.e. the network identified is not any of the wireless communication networks connected with the WLAN, the WLAN AN will route this authentication request to the default AAA proxy.
Step 606: After receiving the authentication request, the default AAA proxy finds that the network selection information therein matches no wireless communication network connected with this WLAN, then sends an advertisement message of EAP-Request/Notification to the WLAN AN; and the WLAN AN then sends the advertisement message down to the WLAN user terminal. In accordance with EAP, both the WLAN AN and the user will immediately respond for acknowledgement after receiving the message. The advertisement message carries the information of the wireless communication networks connected with this WLAN, one or more than one message may be sent, and the interaction is ended according to the instruction information in the last EAP message.
Step 607: The WLAN user terminal re-selects a network after receiving the information of wireless communication networks carried in the advertisement message. Here, the AAA proxy and WLAN AN will wait for the response from the WLAN user terminal after the advertisement message is sent down.
Steps 608~609: The AAA proxy sends an EAP-Request [Identity] message again to the WLAN user terminal to request the user identity. After receiving the message, the WLAN user terminal returns the user identity carrying the new network-selection information by an EAPoL-Response[Identity] message.
Steps 610~611: The WLAN AN, according to the new network-selection information sent from the WLAN user terminal, determines the wireless communication network the WLAN user terminal desires to access, i.e. a VPLMN here, and sends the information of the authentication request to the AAA proxy and AS in the identified VPLMN for authentication.

### Embodiment 2:

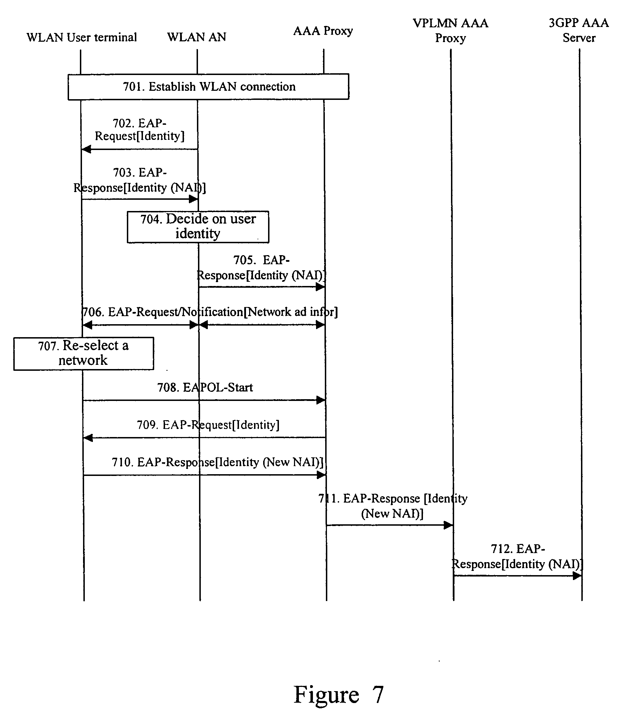

In this embodiment, a default AAA proxy is configured in advance in a 3GPP-WLAN inter-working network as the unit for managing and sending network information. This unit may provide service for one or more than one WLAN AN. As shown in Figure 7, the procedure of interactive processing of network selection information in accordance with this invention comprises the steps of:
Steps 701~707 are basically the same as steps 601~607 in the first embodiment except that, after the advertisement message is sent, the AAA proxy and the WLAN AN will not wait for the response form the WLAN user terminal but directly end the relevant procedures.
Step 708: As the AAA proxy and the WLAN AN will not wait for the response from the WLAN user terminal, the WLAN user terminal, after re-selecting a network according to the information of wireless communication networks in the advertisement message, re-initiates an authentication procedure by an EAPOL-Start message.
Steps 709~710: After receiving the EAPOL-Start message, the WLAN AN re-send an EAP-Request[Identity] message to the WLAN user terminal to request the user identity again; the WLAN user terminal returns the user identity carrying the new network-selection information to the WLAN AN by an EAPoL-Response[Identity] message.
Steps 711~712: After receiving the new user identity, the WLAN AN, according to the new network-selection information therein, determines the wireless communication network selected by the WLAN user terminal, and sends the information of the authentication request of the WLAN user terminal to the AAA proxy and AS of the network identified by the network selection information for authentication. Here, after receiving the information of authentication request, the roaming network selected by the WLAN user terminal will first modify the information of visited network in the user identity field into the information of home network of this WLAN user terminal, and then send the information of authentication request carrying the modified user identity field to the AS of the home network of this WLAN user terminal for authentication.

The foregoing description is about preferred embodiments of this invention and should not be construed as limiting the protection scope thereof.

## Claims

1. An interactive processing method for network selection information of user terminal in wireless local area network (WLAN), comprising:
a. After a radio connection between a WLAN user terminal and a WLAN access network (AN) is established, the WLAN AN or the WLAN user terminal initiating an authentication procedure and the WLAN AN sending to the WLAN user terminal a user identity request message;
b. Upon receiving the user identity request message, the WLAN user terminal returning to the WLAN AN a response message containing a network selection information;
c. Judging whether the network selection information in the received message indicates a wireless communication network to which the WLAN AN is able to route an authentication request, if yes, sending the authentication request of the WLAN user terminal to the indicated wireless communication network; otherwise, sending an advertisement message to the WLAN user terminal, and the WLAN user terminal performing subsequent operations according to the contents of the advertisement message.

2. The method according to Claim 1, wherein if the WLAN user terminal initiates the authentication procedure in step a, the step a further comprises: the WLAN user terminal sending to the network side a request for information about supported wireless communication networks before the authentication procedure is initiated.

3. The method according to Claim 2, wherein the request for information about supported wireless communication networks sent by the WLAN user terminal to the network side is made by an Extendable Authentication Protocol (EAP) signaling or by the portal interaction.

4. The method according to Claim 1, wherein the step b further comprises: upon receiving the user identity request message, the WLAN user terminal sending to the network side a request for information about supported wireless communication networks; upon receiving the request, the network side issuing to the WLAN user terminal the information about supported wireless communication networks; the WLAN user terminal selecting a wireless communication network according to the received information and re-sending to the WLAN AN an authentication request which contains the new network-selection information.

5. The method according to Claim 4, wherein the request for information about supported wireless communication networks is a specific field placed in a response message, or a specific value of a user identity field in a response message, or an independently configured message.

6. The method according to Claim 1, wherein in step c the network side sends to the WLAN user terminal an advertisement message containing the information about supported wireless communication networks, and the method further comprises: upon receiving the advertisement message, the WLAN user terminal re-selecting a wireless communication network and obtaining the network information corresponding to the selected wireless communication network based on the network information in the advertisement message, and sending a message containing the new network-selection information to the WLAN AN, returning to step c.

7. The method according to Claim 6, further comprising: the network side waiting for a response message from the WLAN user terminal after issuing the advertisement message, and if receiving no response in a certain period of time, taking the initiative to issue a request for selection result to the WLAN user terminal.

8. The method according to Claim 6, further comprising: the network side ending the current authentication procedure after issuing the advertisement message, and the WLAN user terminal, after re-selecting a wireless communication network, re-initiating to the WLAN AN an authentication procedure, and sending an authentication request which contains the new network-selection information.

9. The method according to Claim 1, wherein in step c the network side sends to the WLAN user terminal an advertisement message indicating the ineffectiveness of the network currently selected by the WLAN user terminal and the need of downloading the information about supported wireless communication networks, the method further comprises: the WLAN user terminal judging whether it needs to download the information about supported wireless communication network, if it needs, the WLAN user terminal returning to the network side a response indicating that it needs to download the network information; upon receiving the response, the network side information issuing to the WLAN user terminal the information about supported wireless communication network; upon obtaining the information, the WLAN user terminal re-selecting a wireless communication network and re-sending to the WLAN AN an authentication request which contains the new network-selection information, returning to step c; otherwise, making no processing or returning a response indicating no need of downloading the information.

10. The method according to Claim 9, further comprising: the network side waiting for a response message from the WLAN user terminal after issuing the advertisement message, and if having not received a response after a certain period of time, taking the initiative to issue the information about supported wireless communication networks to the WLAN user terminal.

11. The method according to Claim 9, further comprising: the network side ending the current procedure after issuing the advertisement message, and the WLAN user terminal, if needing the network information, taking the initiative to initiate a procedure of downloading network information.

12. The method according to Claim 6 or Claim 9, wherein the WLAN user terminal, according to preset parameters, makes an automatic selection based on the information about supported wireless communication networks issued by the network side.

13. The method according to Claim 1, wherein the network selection information sent by the WLAN user terminal indicates a wireless communication network to which the WLAN AN is able to route an authentication request, step c further comprises: the network side judging whether the network selection information includes the information about one or more visited networks, if yes, the WLAN AN, according to the information of the visited network, sending the authentication request to the Authentication Authorization Accounting (AAA) proxy in the visited network; otherwise, the WLAN AN, according to the network selection information, sending the authentication request to the AAA server in the home network of the WLAN user.

14. The method according to Claim 13, wherein the network selection information is placed in the user identity field of the response message defined in the format of Network Access Identifier (NAI), and the step c further comprises: upon receiving the authentication request of the WLAN user terminal, the AAA proxy obtaining the realm name of home network by analyzing the user identity field, and forwarding the authentication request to the AAA server in the home network according to the realm name of home network for authentication and authorization.

15. The method according to Claim 14, further comprising: upon receiving the authentication request of the WLAN user terminal, if the AAA proxy confirming that the user identity field contains the information of visited network and the information of visited network is same to the information of the network in which the AAA proxy is located, modifying the user identity field to make it contain only the realm name of the home network of the WLAN user, and forwarding the modified request to the home network of the WLAN user.

16. The method according to Claim 1, wherein the operations of judging and sending an advertisement message in step c are performed by a pre-configured unit for managing and sending network information.

17. The method according to Claim 16, wherein the unit for managing and sending network information is located in an access controller (AC), or in an access point (AP) or in a local AAA server of the WLAN AN, or in an AAA functionality of a wireless communication network to which the WLAN AN is able to route the authentication request.

18. The method according to Claim 1, wherein the network currently serving the WLAN user terminal is the home network of the WLAN user while the authentication request sent by the WLAN user terminal contains the information of visited network, the network currently serving the WLAN user terminal directly changes the information of visited network in the authentication request into the information of home network.

19. The method according to Claim 1, wherein the network currently serving the WLAN user terminal is the home network of the WLAN user while the authentication request sent by the WLAN user terminal contains the information of visited network, the network currently serving the WLAN user terminal informs the WLAN user terminal that the network is the home network of the WLAN user, and judges whether the WLAN user terminal selects the home network, if yes, the network currently serving the WLAN user terminal authenticates the WLAN user terminal; otherwise, the visited network authenticates the WLAN user terminal.

20. The method according to Claim 4, Claim 6 or Claim 9, further comprising: when issuing the information about supported wireless communication networks, the network side selecting and issuing the information of the visited networks having roaming relationship with the home network indicated by the WLAN user terminal.

21. The method according to Claim 6 or Claim 9, wherein the network side issues the advertisement message by the EAP-Request/notification message and the advertisement message contains the information about supported wireless communication networks provided for the WLAN user terminal.
